# DEMANDE DE BREVET EUROPEEN

(11) **EP 4 260 691 A1**
(43) Date de publication de la demande: **18.10.2023**
(21) Numéro de dépôt: 23167962.2
(22) Date de dépôt: 14.04.2023
(51) Int. Cl.: A01K 1/06

(54) **BARRIERE DE TYPE CORNADIS**

(30) Priorité: 14.04.2022 FR 2203461
(71) Demandeur: Agritubel, 86200 Loudun (FR)
(72) Inventeur: DUBOUIX, Philippe, 86200 LOUDUN (FR)
(74) Mandataire: Derambure Conseil

(57) **Abrégé**

Barrière (10) de type cornadis comprenant un longeron supérieur (11) et un longeron inférieur (12) ; une paire de montants verticaux (13a, 13b) reliés au longeron inférieur (12) et au longeron supérieur (11) pour définir un cadre ; un balancier (20) pivotant par rapport au cadre autour d'un premier axe transversal (Y1), le balancier (20) comportant un bras (21) et une fourche (22) solidaire d'une extrémité supérieure du bras (21), la fourche comportant une paire de branches (23) disposées transversalement de chaque côté du longeron supérieur (11) le balancier comportant une tige (24) reliée rigidement à chacune des branches (23), la tige (24) étant disposée au-dessus du longeron supérieur (11) ; un mécanisme de verrouillage (30) comprenant une platine (31) fixée au longeron supérieur (11) et sur laquelle sont articulés un premier et un second taquet (40a ; 40b) entre une position déployée et une position escamotée.

## Description

### Domaine technique

La présente description se rapporte à une barrière de type cornadis.

### Technique antérieure

Les barrières de type cornadis sont utilisées pour gérer l'alimentation d'animaux et aussi pour immobiliser un animal afin d'assurer certaines interventions, notamment des soins vétérinaires.

Une barrière de type cornadis comprend généralement un longeron supérieur, un longeron inférieur et une pluralité de montants verticaux s'étendant chacun entre le longeron supérieur et le longeron inférieur de sorte à définir une pluralité de cadres. Chaque cadre est donc délimité verticalement par le longeron supérieur et le longeron inférieur et longitudinalement par deux montants verticaux adjacents.

La direction longitudinale s'entend de la direction dans laquelle le longeron supérieur et le longeron inférieur s'étendent. La direction verticale correspond à la direction du champ de pesanteur terrestre. La direction verticale est perpendiculaire à la direction longitudinale. La direction transversale correspond enfin à une direction perpendiculaire à la direction longitudinale et à la direction verticale. En outre, les qualificatifs de position absolue, tels que les termes « haut », « bas », etc., ou de position relative, tels que les termes « dessus », « dessous », « supérieur », « inférieur », etc., et les qualificatifs d'orientation, tels que les termes « vertical » et « horizontal » font référence à la direction verticale telle que définie.

Chaque cadre est équipé d'un balancier pour la contention d'un animal. Le balancier est mobile en rotation autour d'un axe transversal de rotation depuis une position d'ouverture permettant le passage de la tête de l'animal. Le balancier peut être pivoté dans une position de fermeture délimitant un passage restreint permettant soit de refuser l'accès à un animal, soit d'entraver un animal par l'encolure. Le balancier peut encore être pivoté dans une position de dégagement permettant à l'animal d'accéder à une auge pour s'alimenter et/ou de retirer sa tête par le bas du cadre.

Des moyens peuvent être prévus pour verrouiller le balancier dans l'une de ces positions, notamment dans la position de fermeture. Selon une première solution décrite dans le document FR 2 750 292, la barrière comprend une tringle s'étendant longitudinalement au-dessus du longeron supérieur et le balancier comprend une fourche au niveau de son extrémité supérieure. La fourche comprend deux branches qui sont chacune disposées d'un côté respectif de la tringle dans la direction transversale. La tringle comprend par ailleurs une encoche dans laquelle un coulisseau s'étendant transversalement entre les branches de la fourche peut s'emboiter sous l'effet de son poids, permettant ainsi de verrouiller le balancier en rotation autour de son axe transversal de rotation. Classiquement, le coulisseau est guidé en translation entre les branches de la fourche en étant reçu, à chacune de ses extrémités dans la direction transversale, dans une fente correspondante prévue à travers chaque branche de la fourche. Une rotation de la tringle autour de son axe d'extension permet de dégager le coulisseau de l'encoche et déverrouille ainsi le balancier.

Néanmoins, la première solution présente l'inconvénient que le verrouillage du balancier n'est pas obtenu de manière certaine. Notamment, lorsque le balancier pivote rapidement, le déplacement du coulisseau sous l'effet de son propre poids n'est pas assez rapide pour garantir son insertion dans l'encoche avant que le balancier ne dépasse la position de verrouillage. En plus, la rotation du balancier soumet le coulisseau à une force centrifuge qui s'oppose, au moins en partie, à la force de pesanteur destinée à assurer le déplacement du coulisseau vers l'encoche. Ainsi, plus la rotation du balancier est rapide, plus les risques de non-verrouillage du balancier sont élevées. Par ailleurs, les fentes prévues à travers les branches de la fourche du balancier et l'encoche prévue sur la tringle peuvent facilement être obstruées par des débris ou des résidus, ce qui peut entrainer également un non-verrouillage du balancier. Enfin, le déverrouillage individuel d'un balancier requière le retrait manuel du coulisseau de l'encoche correspondante par un opérateur humain. Cette opération présente cependant un risque important de blessures pour l'opérateur humain.

Selon une seconde solution de verrouillage décrite dans le document FR 3 070 824, la barrière comprend une tringle s'étendant longitudinalement au-dessus du longeron supérieur et le balancier comprend, au niveau de son extrémité supérieure, une fourche ayant deux branches entre lesquelles s'étend transversalement une tige. La tige est notablement située, dans la direction verticale, entre le longeron supérieur et la tringle. La barrière comporte en outre une paire de taquets montés articulés sur la tringle et adaptés pour coopérer avec la tige sous l'effet de leurs poids afin de verrouiller le balancier en rotation autour de son axe transversal de rotation. Une rotation de la tringle autour de son axe d'extension permet de manoeuvrer les taquets dans une position inactive escamotée et déverrouille ainsi le balancier.

Toutefois, la seconde solution ne donne pas non plus entière satisfaction quant à assurer un verrouillage du balancier qui est robuste. En effet, selon l'agencement de la seconde solution, les efforts exercés par l'animal sur le balancier lorsque celui est verrouillé sont d'abord transmis à chacun des taquets. Dès lors, si les efforts exercés par l'animal sont importants, ceux-ci peuvent être de nature à provoquer une déformation, voire une rupture, des taquets, libérant alors l'animal. Ensuite, les efforts exercés par l'animal sur le balancier sont transmis des taquets à la tringle, ce qui peut gêner, voire empêcher, de manoeuvrer la tringle. De plus, la tringle peut alors être soumise à des efforts de flambage qui peuvent aussi conduire à la libération du balancier.

### Résumé

La présente divulgation vient améliorer la situation.

Il est proposé une barrière de type cornadis comprenant :
- un longeron supérieur et un longeron inférieur s'étendant chacun selon une direction longitudinale ;
- une paire de montants verticaux chacun reliés au longeron inférieur et au longeron supérieur de sorte à définir un cadre,

- un balancier monté pivotant par rapport au cadre autour d'un premier axe transversal, le balancier comportant un bras et une fourche, laquelle étant solidaire d'une extrémité supérieure du bras, la fourche comportant une paire de branches disposées de chaque côté du longeron supérieur dans la direction transversale, le balancier comportant en outre une tige reliée rigidement à chacune des branches de la fourche, la tige étant disposée au-dessus du longeron supérieur dans la direction verticale,
- un mécanisme de verrouillage comprenant une platine fixée au longeron supérieur et sur laquelle sont articulés un premier taquet et un second taquet entre une position déployée dans laquelle le premier taquet et le second taquet sont adaptés pour coopérer avec la tige du balancier afin de bloquer le balancier en pivotement autour du premier axe transversal dans une position de verrouillage par rapport au cadre, et une position escamotée dans laquelle le balancier peut pivoter librement autour du premier axe transversal par rapport au cadre,
- un organe de commande adapté pour déplacer le premier taquet et/ou le second taquet de la position déployée vers la position escamotée.

Une telle barrière permet d'obtenir un verrouillage robuste du balancier par rapport au cadre. En particulier, la fourche du balancier est dépourvue de tout élément mobile ou coulissant nécessaire au verrouillage du balancier. Aussi les risques d'obstruction ou d'obturation du mécanisme de verrouillage, dûs à des résidus, sont limités, voire supprimés. Par ailleurs, un tel agencement autorise le passage de la tige reliée rigidement à chacune des branches pour solidariser les branches de la fourche entre elles, permettant ainsi une résistance mécanique accrue des branches de la fourche.

Le terme « taquet » réfère à des éléments d'arrêt (ou encore des éléments « de butée ») mobiles. Lorsque le premier taquet et le second taquet sont chacun dans leur position escamotée, le balancier peut pivoter autour du premier axe transversal sans que la tige ne heurte le premier taquet ou le second taquet.

La platine peut définir un volume intérieur. La platine peut comporter un premier flasque et un second flasque assemblés l'un à l'autre de sorte à délimiter le volume intérieur. Chaque taquet peut être reçu en tout ou partie à l'intérieur du volume intérieur défini par la platine. On obtient ainsi un mécanisme de verrouillage compact.

Le balancier peut notamment pivoter entre une position d'ouverture permettant le passage de la tête d'un animal dans une partie supérieure du cadre et une position de dégagement permettant à l'animal d'accéder à une auge pour s'alimenter et/ou de retirer sa tête par une partie inférieure du cadre.

Dans la position de verrouillage, le bras du balancier peut s'étendre selon la direction verticale. Ainsi, dans la position de verrouillage, le bras du balancier forme, avec l'un des montants verticaux, un passage dont l'écartement, dans la direction longitudinale, est identique sur toute la dimension verticale du cadre. Cela définit une position de fermeture, permettant soit de refuser l'accès à un animal, soit d'entraver l'animal par l'encolure.

La trajectoire de la tige du balancier autour du premier axe transversal peut former un arc de cercle encerclant la platine du mécanisme de verrouillage.

La tige peut s'étendre selon la direction transversale entre les branches de la fourche.

Dans leur position déployée, le premier taquet et le second taquet peuvent être adaptés pour empêcher un déplacement circulaire de la tige du balancier autour du premier axe transversal. En particulier, dans leur position déployée, le premier taquet peut être adapté pour empêcher un déplacement circulaire de la tige autour du premier axe transversal dans un premier sens de rotation et le second taquet peut être adapté pour empêcher un déplacement circulaire de la tige autour du premier axe transversal dans un second sens de rotation. Le premier taquet et le second taquet peuvent chacun présenter, dans leur position déployée, une face latérale, ou frontale, formant une butée apte à empêcher un déplacement circulaire de la tige du balancier autour du premier axe transversal, respectivement dans un premier sens de rotation et un second sens de rotation. Autrement dit, la tige peut être disposée, longitudinalement, entre le premier taquet et le second taquet pour bloquer le balancier en pivotement autour du premier axe transversal. Il n'est pas exclu qu'il existe un jeu dans la direction longitudinale, de chaque côté, entre la tige et chaque taquet lorsque celle-ci est disposée longitudinalement entre le premier taquet le second taquet dans leur position déployée. On assure ainsi un verrouillage simple et sûr du balancier.

Le premier taquet et le second taquet peuvent être articulés pivotant par rapport à la platine, respectivement autour d'un deuxième axe transversal et d'un troisième axe transversal. Ainsi, le premier taquet et le second pivotent entre la position déployée et la position escamotée en restant dans un plan normal à la direction transversale qui définit un plan de la barrière. Cela évite notamment que les taquets soient protubérants de chaque côté du cadre dans la direction transversale lorsqu'ils pivotent, i.e. en dehors du plan de la barrière, ce qui présenterait un risque de blessure pour l'animal ou pour l'opérateur humain.

Lorsque le premier taquet et le second taquet sont dans la position déployée, un espace libre peut être formé longitudinalement entre le premier taquet et le second taquet, l'espace libre étant adapté pour recevoir la tige du balancier. En particulier, l'espace libre peut avoir une dimension mesurée dans la direction longitudinale permettant à chaque taquet de pivoter entre la position déployée et la position escamotée lorsque la tige du balancier est reçue dans l'espace libre. On évite ainsi un pincement de la tige du balancier lorsque chaque taquet pivote depuis la position déployée jusqu'à la position escamotée, ce qui engendrerait un blocage du mécanisme de verrouillage.

Dans la position déployée et/ou la position escamotée, le premier taquet et le second taquet peuvent être en butée contre une face interne de la platine. Chaque taquet peut comprendre au moins un ergot destiné à être en butée contre la face interne de la platine lorsque le taquet respectif est dans la position déployée et/ou la position escamotée. L'ergot de chacun du premier taquet et du second taquet dans la position déployée peut être en butée contre la face interne de la platine dans la direction verticale. Le premier taquet et le second taquet peuvent chacun comprendre deux ergots disposés de chaque côté dans la direction transversale.

Le premier taquet et/ou le second taquet peuvent être chacun adaptés pour être déplacés de la position déployée vers la position escamotée sous l'effet du balancier pivotant vers la position de verrouillage. Cela permet un effacement automatique du premier taquet et/ou du second taquet. La tige du balancier peut ainsi être amenée en coopération avec le premier taquet et/ou le second taquet sans qu'il soit nécessaire d'agir directement et manuellement sur le mécanisme de verrouillage. Le verrouillage du balancier est donc aisé et rapide. De plus, le risque de blessure pour un opérateur humain est évité.

Le premier taquet et le second taquet peuvent présenter chacun une face supérieure conformée pour qu'un appui de la tige du balancier sur ladite face supérieure lors d'un pivotement du balancier vers la position de verrouillage soit apte à déplacer le taquet respectif de la position déployée vers la position escamotée. La face supérieure de chaque taquet peut être inclinée par rapport à la direction longitudinale. Lorsque le balancier pivote autour du premier axe transversal vers la position de verrouillage, la tige peut exercer un appui sur la face supérieure du premier taquet dans sa position déployée, ou du second taquet dans sa position déployée selon le sens de rotation du balancier autour du premier axe transversal, pour entrainer celui-ci, par effet de rampe, en rotation respectivement autour du deuxième axe transversal ou du troisième axe transversal.

Le second taquet peut être déplacé de la position déployée vers la position escamotée indépendamment d'un mouvement du premier taquet. Lorsqu'un animal insère sa tête dans une partie supérieure du cadre avec le balancier dans sa position d'ouverture et descend sa tête, le balancier pivote autour du premier axe transversal vers la position de dégagement. La tige peut ainsi venir en appui sur la face supérieure du second taquet dans sa position déployée de sorte à entrainer celui-ci dans sa position escamotée. La tige continue ainsi sa course autour du premier axe transversal jusqu'à buter contre le premier taquet.

Le premier taquet peut coopérer avec le second taquet de sorte qu'un déplacement du premier taquet de la position déployée vers la position escamotée entraine un déplacement du second taquet de la position déployée vers la position escamotée. Le déverrouillage du balancier peut alors être exercé par l'intermédiaire d'un seul organe de commande agissant uniquement sur le premier taquet.

Un déplacement du second taquet de la position escamotée vers la position déployée peut entrainer un déplacement du premier taquet de la position escamotée vers la position déployée.

Le premier taquet peut comprendre une partie saillante en appui selon la direction verticale sur une partie saillante du second taquet. Cela permet de réduire l'encombrement du mécanisme de verrouillage. Cela permet notamment de réduire l'encombrement du premier taquet et du second taquet à l'intérieur du volume intérieur défini par la platine. La partie saillante du premier taquet peut être en forme de U pour recouvrir la partie saillante du second taquet. Cela permet également d'éviter un débattement dans la direction transversale de l'un des taquets par rapport à l'autre.

Le mécanisme de verrouillage peut comprendre des moyens adaptés pour assurer un rappel du premier taquet et le second taquet dans la position déployée. En l'absence de contraintes extérieures, le premier taquet et le second taquet sont maintenus dans leur position déployée. Cela permet un verrouillage robuste du balancier et un retour automatique du premier taquet et du second taquet dans leur position déployée. Ainsi, le premier taquet et le second taquet peuvent être déplacés automatiquement de la position escamotée vers la position déployée lorsque le balancier est dans la position de verrouillage.

Le mécanisme de verrouillage peut comprendre uniquement des moyens pour assurer un rappel du second taquet dans la position déployée. Lesdits moyens peuvent permettre le retour du premier taquet dans la position déployée par l'intermédiaire du second taquet.

Lesdits moyens peuvent comprendre des moyens élastiques. Les moyens élastiques sont une solution économique et fiable pour assurer un rappel du premier taquet et du second taquet dans la position déployée.

Lesdits moyens peuvent comprendre un premier ressort de torsion et un second ressort de torsion interposés respectivement entre la platine et le premier taquet et entre la platine et le second taquet.

Lesdits moyens peuvent être disposés à l'intérieur du volume intérieur défini par la platine du mécanisme de verrouillage. Lesdits moyens sont ainsi mieux protégés de l'environnement extérieur et s'usent donc moins vite.

Lesdits moyens peuvent comprendre un seul ressort de torsion interposé entre la platine et le second taquet. Le ressort de torsion peut permettre le retour du premier taquet dans la position déployée par l'intermédiaire du second taquet.

L'organe de commande peut comporter une commande de déverrouillage collective qui comprend une tringle s'étendant parallèlement au longeron supérieur, la tringle étant disposée, dans la direction verticale, entre le longeron supérieur et la tige du balancier, et dans laquelle une rotation de la tringle autour de son axe d'extension entraine un déplacement du premier taquet et/ou du second taquet de la position déployée vers la position escamotée.

La tringle permet la commande simultanée d'une pluralité de mécanismes de verrouillage portés par le longeron supérieur. En particulier, la tringle peut entrainer le premier taquet et/ou le second taquet en rotation respectivement autour du deuxième axe transversal et du troisième axe transversal. De manière avantageuse, la tringle n'encaisse pas les efforts induits par un animal sur le balancier. En outre, un tel agencement permet de disposer la tringle au plus proche du longeron supérieur dans la direction verticale, ce qui permet de réduire encore plus l'encombrement de l'agencement.

La tringle peut traverser, de part en part, la platine du mécanisme de verrouillage dans la direction longitudinale. La liaison mécanique reliant la tringle au premier taquet et/ou au second est ainsi mieux protégée de l'environnement extérieur. De plus, la tringle subit uniquement des efforts de torsion. En particulier, la tringle ne subit pas d'effort de flexion et ne subit pas d'effort en porte-à-faux.

La commande de déverrouillage collective peut comporter une came montée rigidement sur la tringle, la came comprenant une portion conformée pour entrainer au moins l'un parmi le premier taquet et le second taquet en rotation respectivement autour du deuxième axe transversal et du troisième axe transversal, directement ou indirectement par l'intermédiaire d'un organe de liaison.

Le premier taquet et/ou le second taquet peuvent être déplacés de la position déployée à la position escamotée par une rotation de la tringle, autour de son axe d'extension, qui est inférieure ou égale à un quart de tour. La tringle peut de préférence pivoter, autour de son axe d'extension, sur une plage angulaire égale à 45° pour déplacer le premier taquet et/ou le second taquet de la position déployée à la position escamotée. Une rotation de la tringle sur une faible plage angulaire permet une utilisation aisée de la tringle par un utilisateur de la barrière.

La tringle peut présenter une section transversale ayant un profil anti-rotation, par exemple une section carrée, polygonale, ovale ou une section quelconque comportant des méplats. La came peut présenter un trou ayant une forme adaptée pour être associée par complémentarité de forme à la tringle et qui permet la solidarisation en rotation entre la tringle et la came autour de l'axe d'extension de la tringle.

Le mécanisme de verrouillage peut comprendre une commande de déverrouillage individuelle qui comprend au moins un bouton poussoir conformé pour déplacer l'un parmi le premier taquet et le second taquet de la position déployée vers la position escamotée.

La commande de déverrouillage individuelle permet de déverrouiller sélectivement un mécanisme de verrouillage, notamment lorsque la barrière comporte une pluralité de mécanismes de verrouillage portés par le longeron supérieur. En particulier, le bouton poussoir peut entrainer le premier taquet et/ou le second taquet en rotation respectivement autour du deuxième axe transversal et du troisième axe transversal.

L'organe de commande peut comprendre un organe de liaison monté pivotant par rapport à la platine autour d'un quatrième axe transversal, l'organe de liaison étant interposé, d'une part, entre la tringle et l'un parmi le premier taquet et le second taquet et, d'autre part, entre le bouton poussoir et ledit taquet parmi le premier taquet et le second taquet.

Le premier taquet et le second taquet peuvent être chacun réalisés en matière plastique. On réduit ainsi le niveau de bruit émis lorsque la tige du balancier heurte l'un des taquets.

### Brève description des dessins

D'autres caractéristiques, détails et avantages apparaîtront à la lecture de la description détaillée ci-après, et à l'analyse des dessins annexés, sur lesquels :
Figure 1 représente une vue partielle en perspective d'une barrière de type cornadis selon la présente description ;
Figure 2 représente une vue partielle de face de la barrière de la figure 1 qui représente schématiquement la course du balancier de la barrière ;
Figure 3 représente une vue en coupe d'une partie de la figure 2 dans le plan de coupe III-III ;
Figure 4 représente une vue en coupe de face du mécanisme de verrouillage mis en oeuvre dans les figures 1 et 2 dans une première configuration ;
Figure 5 représente une vue en coupe de face du mécanisme de verrouillage mis en oeuvre dans les figures 1 et 2 dans une deuxième configuration ;
Figure 6 représente une vue en coupe de face du mécanisme de verrouillage mis en oeuvre dans les figures 1 et 2 dans une troisième configuration ;
Figure 7 représente une vue en coupe de face du mécanisme de verrouillage mis en oeuvre dans les figures 1 et 2 dans une quatrième configuration ;
Figure 8 représente une vue en coupe en perspective du mécanisme de verrouillage mis en oeuvre dans les figures 1 et 2 dans la quatrième configuration ;
Figure 9 représente une vue en coupe de face du mécanisme de verrouillage mis en oeuvre dans les figures 1 et 2 dans une cinquième configuration ;
Figure 10 représente une vue en perspective d'un premier taquet et d'un second taquet mis en oeuvre dans le mécanisme de verrouillage des figures 4 à 9 ;
Figure 11 comporte les figures 11a et 11b qui représentent en perspective une came et un organe de liaison mis en oeuvre dans le mécanisme de verrouillage des figure 4 à 9, dans deux configurations différentes.

### Description des modes de réalisation

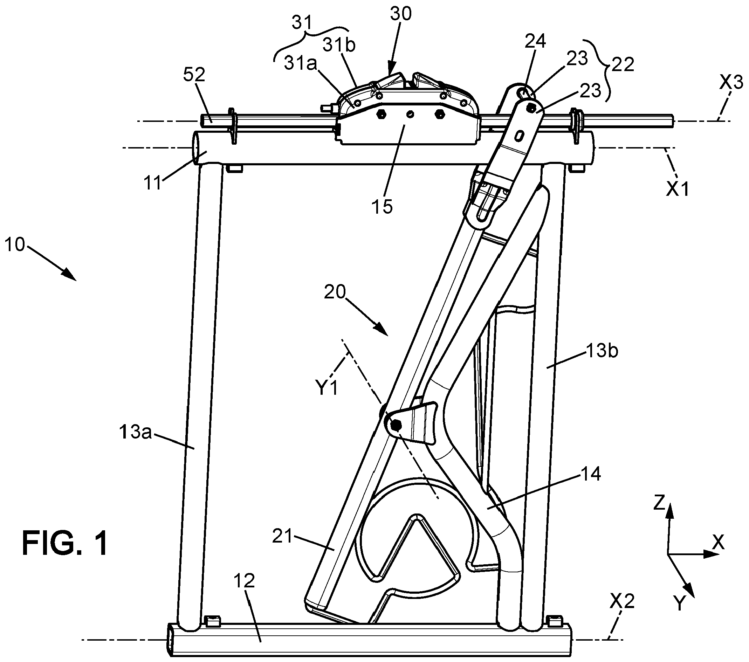

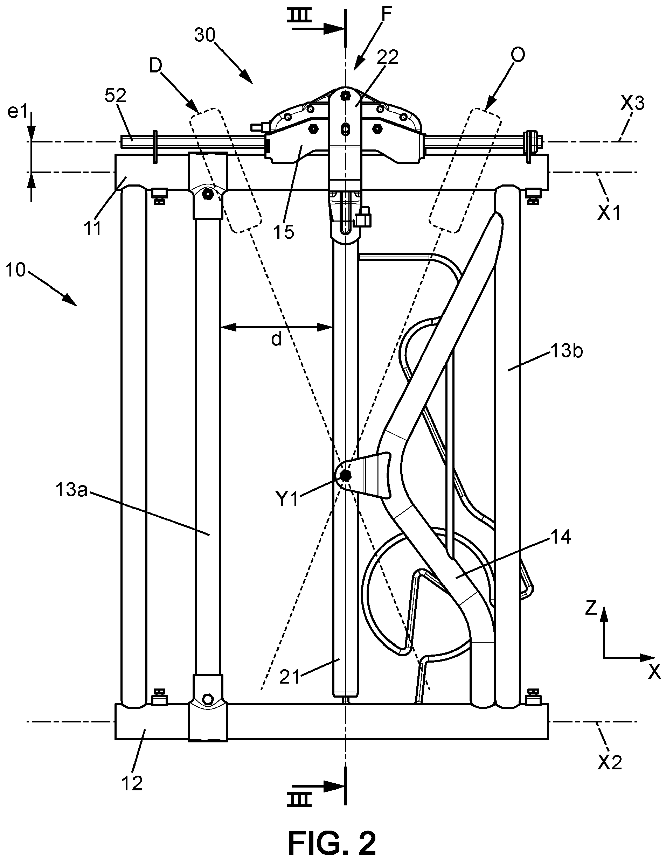

Il est maintenant fait référence aux figures 1 à 3 qui représentent partiellement une barrière 10 de type cornadis. La barrière 10 comprend tout d'abord un longeron supérieur 11 et un longeron inférieur 12 s'étendant chacun selon une direction longitudinale X. Le longeron supérieur 11 s'étend selon un premier axe longitudinal X1 et le longeron inférieur 12 s'étend selon un deuxième axe longitudinal X2. Le premier axe longitudinal X1 et le deuxième axe longitudinal X2 définissent un plan de la barrière 10.

Comme précédemment, dans la description qui suit, la direction longitudinale X s'entend de la direction dans laquelle le longeron supérieur 11 et le longeron inférieur 12 s'étendent. La direction verticale Z correspond à la direction du champ de pesanteur terrestre. La direction verticale Z est perpendiculaire à la direction longitudinale X. La direction transversale Y correspond enfin à une direction perpendiculaire à la direction longitudinale X et à la direction verticale Z. En outre, les qualificatifs de position absolue, tels que les termes « haut », « bas », etc., ou de position relative, tels que les termes « dessus », « dessous », « supérieur », « inférieur », etc., et les qualificatifs d'orientation, tels que les termes « vertical » et « horizontal » font référence à la direction verticale Z telle que définie et, sauf précision contraire, à l'orientation des figures.

La barrière 10 comprend un premier montant vertical 13a et un second montant vertical 13b s'étendant chacun dans la direction verticale Z. Les montants verticaux sont chacun reliés au longeron inférieur 12 et au longeron supérieur 11. Le longeron inférieur 12, le longeron supérieur 11 et la paire de montants verticaux 13a, 13b définissent ainsi un cadre. La barrière 10 comprend par ailleurs une barre coudée 14 s'étendant dans le plan de la barrière 10 à l'intérieur du cadre. La barre coudée 14 est fixe par rapport au cadre. Ici, une extrémité inférieure de la barre coudée 14 est reliée au longeron inférieur 12 et une extrémité supérieure de la barre coudée 14 est reliée au second montant vertical 13b. Alternativement, l'extrémité inférieure de la barre coudée 14 peut être reliée au second montant vertical 13b et/ou l'extrémité supérieure de la barre coudée 14 peut être reliée au longeron supérieur 11.

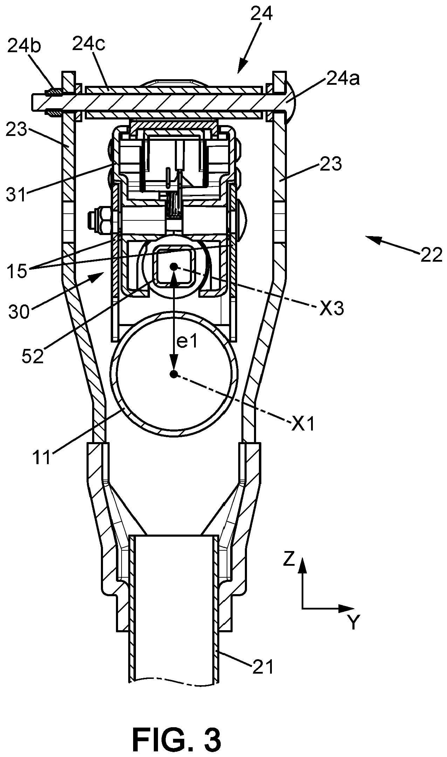

La barrière 10 comprend aussi un balancier 20. Le balancier 20 comporte un bras 21 tubulaire et une fourche 22. La fourche 22 est solidaire d'une extrémité supérieure du bras 21. La fourche 22 comporte une paire de branches 23 disposées de chaque côté du longeron supérieur 11 dans la direction transversale Y. Autrement dit, le longeron supérieur 11 est disposé, dans la direction transversale Y, entre les branches 23 de la fourche 22 du balancier 20. Le balancier 20 comporte en outre une tige 24 s'étendant transversalement entre les branches 23 de la fourche 22. La tige 24 est reliée rigidement à chacune des branches 23 de la fourche 22. Comme visible à la figure 3, la tige 24 comporte ici une vis 24a et un écrou 24b. La vis 24a passe au travers d'un trou formé dans chacune des branches 23 de la fourche 22. La vis 24a comporte une tête en appui, dans la direction transversale Y, sur une face externe de l'une des branches 23 et l'écrou 24b est vissé sur la vis 24a pour être serré sur la face externe de l'autre des branches 23. Par « faces externes » des branches 23, il est entendu les faces des branches 23 qui sont opposées l'une de l'autre. La tige 24 comprend ici une gaine 24c recouvrant la partie de la vis 24a qui est située entre les branches 23 dans la direction transversale Y. La gaine peut, par exemple, être réalisée en un matériau plastique. Enfin, de manière remarquable, la tige 24 est disposée au-dessus du longeron supérieur 11 dans la direction verticale Z.

Le balancier 20 est monté pivotant par rapport au cadre autour d'un premier axe transversal Y1. En particulier, le bras 21 du balancier 20 est ici articulé pivotant autour du premier axe transversal Y1 par rapport à une embase qui est solidaire de la barre coudée 14. Par conséquent, lors du pivotement du balancier 20, la tige 24 du balancier 20 présente une trajectoire qui forme un arc de cercle autour du premier axe transversal Y1. Le balancier 20 peut notamment pivoter entre une position d'ouverture O permettant le passage de la tête d'un animal dans une partie supérieure du cadre et une position de dégagement D permettant à l'animal d'accéder à une auge pour s'alimenter et/ou de retirer sa tête par une partie inférieure du cadre. Autrement dit, dans la position d'ouverture O, le balancier 20 est dans une position telle qu'une partie inférieure du bras 21 du balancier 20 obstrue la partie inférieure du cadre. Le passage de la tête d'un animal à travers le cadre n'est alors permis qu'au niveau de la partie supérieure du cadre, longitudinalement entre une partie supérieure du bras 21 du balancier 20 et le premier montant vertical 13a. Dans la position de dégagement D, le balancier 20 est dans une position telle qu'une partie supérieure du bras 21 du balancier 20 obstrue la partie supérieure du cadre. Le passage de la tête d'un animal à travers le cadre n'est alors permis qu'au niveau de la partie inférieure du cadre, longitudinalement entre une partie inférieure du bras 21 du balancier 20 et le premier montant vertical 13a.

Il est en outre prévu de pouvoir verrouiller le balancier 20 dans une position de verrouillage F. Dans la position de verrouillage F, le bras 21 du balancier 20 s'étend ici selon la direction verticale Z. Ainsi, dans la position de verrouillage, le bras 21 du balancier 20 forme, avec le premier montant vertical 13a, un passage dont l'écartement, dans direction longitudinale X, est identique sur toute la dimension verticale du cadre. Cela définit une position de fermeture, permettant soit de refuser l'accès à travers le cadre pour un animal, soit d'entraver l'animal par l'encolure.

Pour ce faire, la barrière 10 comprend un mécanisme de verrouillage 30. Le mécanisme de verrouillage 30 comprend une platine 31 fixée au longeron supérieur 11. La platine 31 se présente sous la forme d'un boitier définissant un volume intérieur. La platine 31 comporte un premier flasque 31a et un second flasque 31b qui sont assemblés l'un à l'autre dans la direction transversale Y, par exemple par vissage, rivetage, collage ou encore par emboitement. La platine 31 est disposée transversalement entre deux parois longitudinales 15 de la barrière 10, solidaires du longeron supérieur 11. Chaque flasque 31a, 31b de la platine 31 est fixée à une paroi longitudinale 15 respective, par exemple par boulonnage traversant, vissage, rivetage ou encore collage. Enfin, la trajectoire circulaire de la tige 24 autour du premier axe transversal Y1 encercle la platine 31.

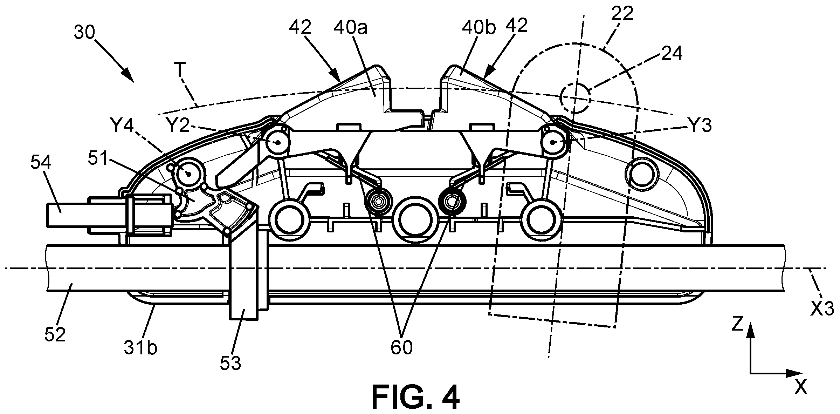

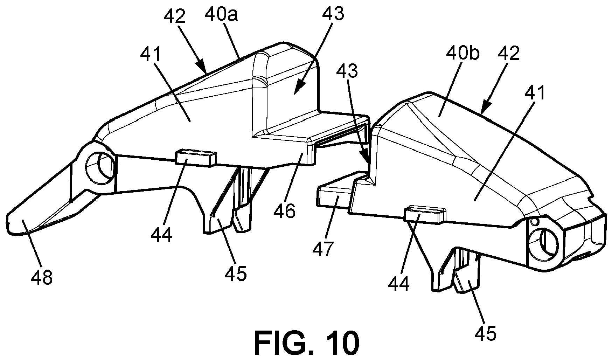

Le mécanisme de verrouillage est plus particulièrement visible aux figures 4 à 9. Le mécanisme de verrouillage 30 comprend un premier taquet 40a et un second taquet 40b, représentés de manière isolée à la figure 10. Le premier taquet 40a et le second taquet 40b comprennent chacun un corps principal 41 qui comporte au moins une face supérieure 42 et une face latérale 43. Le premier taquet 40a et le second taquet 40b sont chacun reçus en partie à l'intérieur du volume intérieur défini par la platine 31. A cet effet, une paroi supérieure de la platine 31 présente une ouverture à travers laquelle sont reçus le premier taquet 40a et le second taquet 40b. Le premier taquet 40a et le second taquet 40b sont articulés pivotants par rapport à la platine 31, respectivement autour d'un deuxième axe transversal Y2 et d'un troisième axe transversal Y3. Ainsi, le premier taquet 40a et le second taquet 40b pivotent en restant dans le plan de la barrière 10. Cela évite notamment que les taquets 40a, 40b deviennent protubérants de chaque côté du cadre dans la direction transversale Y, i.e. en dehors du plan de la barrière 10, lors de leur pivotement autour du deuxième axe transversal Y2 et du troisième axe transversal Y3, ce qui présenterait un risque de blessure pour un animal ou pour un opérateur humain. Le premier taquet 40a et le second taquet 40b sont notamment articulés pivotants entre une position déployée et une position escamotée.

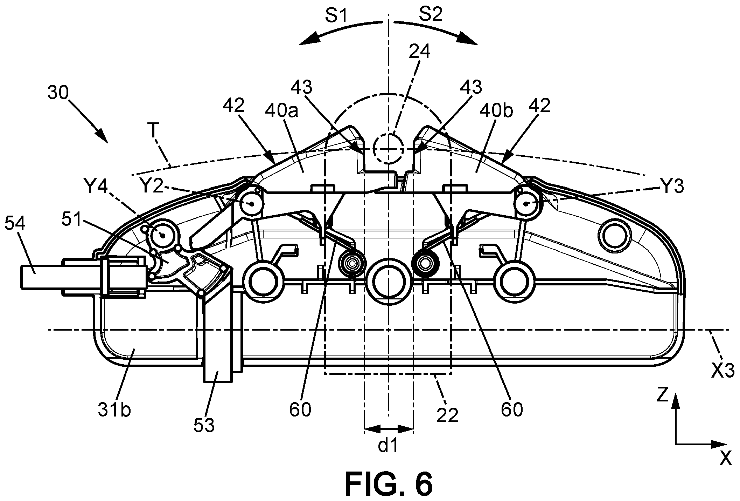

Comme représenté à la figure 6, dans la position déployée, le premier taquet 40a et le second taquet 40b sont adaptés pour coopérer avec la tige 24 du balancier 20 afin de bloquer le balancier 20 en pivotement autour du premier axe transversal Y1 dans la position de verrouillage par rapport au cadre. Dans leur position déployée, le premier taquet 40a et le second taquet 40b sont adaptés pour empêcher un déplacement circulaire de la tige 24 du balancier 20 autour du premier axe transversal Y1. En particulier, dans leur position déployée, le premier taquet 40a est adapté pour empêcher un déplacement circulaire de la tige 24 autour du premier axe transversal Y1 dans un premier sens S1 de rotation et le second taquet 40b est adapté pour empêcher un déplacement circulaire de la tige 24 autour du premier axe transversal Y1 dans un second sens S2 de rotation. Dans leur position déployée, la face latérale 43 de chaque taquet 40a, 40b s'étend perpendiculairement à la direction longitudinale X. Dans leur position déployée, la face latérale 43 de chaque taquet 40a, 40b forme ainsi une butée adaptée pour empêcher un déplacement circulaire de la tige 24 du balancier 20 autour du premier axe transversal Y1, respectivement dans le premier sens S1 de rotation et le second sens S2 de rotation. Autrement dit, lorsque le premier taquet 40a et le second taquet 40b sont dans la position déployée, un espace libre est formé longitudinalement entre le premier taquet 40a et le second taquet 40b, l'espace libre étant adapté pour recevoir la tige 24 du balancier 20. Ainsi, dans la position de verrouillage du balancier 20, la tige 24 est disposée, longitudinalement, dans l'espace libre entre le premier taquet 40a et le second taquet 40b pour bloquer le balancier 20 en pivotement autour du premier axe transversal Y1. Toutefois, il n'est pas exclu qu'il existe un jeu dans la direction longitudinale X, de chaque côté, entre la tige 24 et chaque taquet 40a, 40b lorsque celle-ci est disposée longitudinalement entre le premier taquet 40a et le second taquet 40b dans leur position déployée. Le premier taquet 40a et le second taquet 40b sont chacun réalisés en un matériau plastique. On réduit ainsi le niveau de bruit émis lorsque la tige 24 du balancier 20 heurte l'un des taquets 40a, 40b.

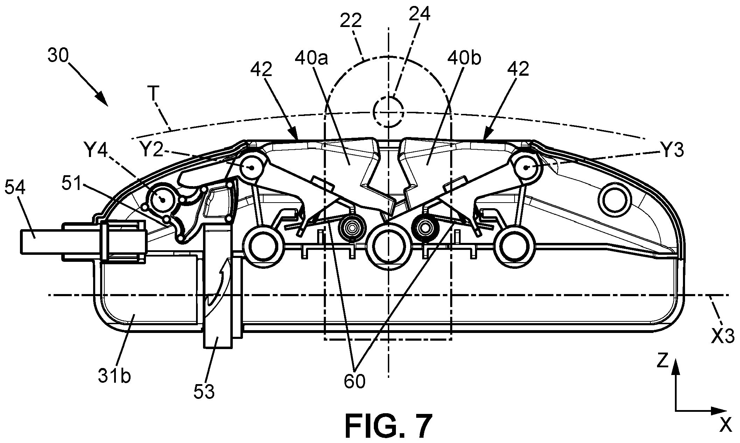

Dans la position escamotée, visible aux figures 7 à 9, le balancier 20 peut pivoter librement autour du premier axe transversal Y1 par rapport au cadre. Lorsque le premier taquet 40a et le second taquet 40b sont chacun dans leur position escamotée, le balancier 20 peut pivoter autour du premier axe transversal Y1 sans que la tige 24 ne heurte le premier taquet 40a ou le second taquet 40b. En d'autres termes, le premier taquet 40a et le second taquet 40b sont chacun disposés à distance de la trajectoire de la tige 24 autour du premier axe transversal Y1. Dans la position escamotée, chaque taquet 40a, 40b est ici davantage reçu dans le volume intérieur défini par la platine 31 qu'il ne l'est dans la position déployée.

Le premier taquet 40a et le second taquet 40b sont chacun adaptés pour être déplacés de la position déployée vers la position escamotée sous l'effet du balancier 20 pivotant vers la position de verrouillage, respectivement selon le second sens S2 pour le taquet 40a et selon le premier sens S1 pour le taquet 40b. Cela permet un effacement automatique du premier taquet 40a et/ou du second taquet 40b. La tige 24 du balancier 20 peut ainsi être amenée en coopération avec le premier taquet 40a et le second taquet 40b sans qu'il soit nécessaire d'agir directement et manuellement sur le mécanisme de verrouillage 30. Le verrouillage du balancier 20 est donc aisé et rapide. De plus, le risque de blessure pour un opérateur humain est évité. Pour ce faire, la face supérieure 42 du premier taquet 40a et du second taquet 40b sont chacune conformées pour qu'un appui de la tige 24 du balancier 20 sur la face supérieure 42 considérée lors de son pivotement du balancier 20 vers la position de verrouillage soit apte à déplacer le taquet 40a, 40b respectif de la position déployée vers la position escamotée. Pour ce faire, la face supérieure 42 de chaque taquet 40a, 40b est ici inclinée par rapport à la direction longitudinale X. Lorsque le balancier 20 pivote autour du premier axe transversal Y1 vers la position de verrouillage, la tige 24 exerce un appui sur la face supérieure 42 du premier taquet 40a dans sa position déployée ou sur la face supérieure 42 du second taquet 40b dans sa position déployée selon le sens S1, S2 de rotation du balancier 20 autour du premier axe transversal Y1 pour entrainer le taquet 40a, 40b considéré, par effet de rampe, en rotation respectivement autour du deuxième axe transversal Y2 ou du troisième axe transversal Y3.

L'espace libre formé entre le premier taquet 40a et le second taquet 40b dans leur position déployée peut avoir une dimension d1 mesurée dans la direction longitudinale X permettant à chaque taquet 40a, 40b de pivoter entre la position déployée et la position escamotée lorsque la tige 24 du balancier 20 est reçue dans l'espace libre. On évite ainsi un pincement de la tige 24 du balancier 20 lorsque chaque taquet 40a, 40b pivote depuis la position déployée jusqu'à la position escamotée, ce qui engendrerait un blocage du mécanisme de verrouillage 30.

Le mécanisme de verrouillage 30 comprend par ailleurs des moyens adaptés pour assurer un rappel du premier taquet 40a et du second taquet 40b dans la position déployée. Ainsi, le premier taquet 40a et le second taquet 40b sont chacun adaptés pour être déplacés de la position escamotée vers la position déployée lorsque le balancier 20 est dans la position de verrouillage. Cela permet un verrouillage robuste du balancier 20 et un retour automatique du premier taquet 40a et du second taquet 40b dans leur position déployée. En l'absence de contraintes extérieures appliquées au premier taquet 40a et au second taquet 40b, les moyens assurent également un maintien du premier taquet 40a et du second taquet 40b dans leur position déployée. Dans l'exemple représenté, il s'agit de moyens élastiques. Les moyens élastiques sont une solution économique et fiable pour assurer un rappel du premier taquet 40a et du second taquet 40b dans la position déployée. Toutefois, il n'est pas exclu que d'autres types de moyens soient prévus, par exemple des moyens motorisés adaptés pour entrainer chaque taquet 40a, 40b autour de son axe transversal de rotation respectif.

Les moyens élastiques comprennent un premier ressort de torsion 60 et un second ressort de torsion 60. Le premier ressort de torsion 60 est interposé entre un premier appendice transversal de la platine 31 et une patte 45 du premier taquet 40a. Le second ressort de torsion 60 est interposé entre un second appendice transversal de la platine 31 et une patte 45 du second taquet 40b. Le premier ressort de torsion 60 et le second ressort de torsion 60 sont disposés à l'intérieur du volume intérieur défini par la platine 31.

Pour assurer le maintien du premier taquet 40a et du second taquet 40b dans leur position déployée sous l'action des moyens élastiques, il peut être prévu que le premier taquet 40a et le second taquet 40b soient en butée contre une face interne de la platine 31. Pour ce faire, chaque taquet 40a, 40b comprend ici deux ergots 44, dont un est visible pour chaque taquet 40a, 40b à la figure 10. Les ergots 44 de chaque taquet 40a, 40b s'étendent transversalement de part et d'autre du corps principal 41 du taquet 40a, 40b respectif. Les ergots 44 de chaque taquet 40a, 40b sont destinés à être en butée, dans la direction verticale Z, contre une face interne de la platine 31 lorsque le taquet respectif est dans la position déployée.

Il est maintenant fait référence aux figures 4 à 6 qui illustrent le mécanisme de verrouillage 30 dans différentes configurations au cours du pivotement du balancier 20 autour du premier axe transversal Y1 depuis la position d'ouverture O vers la position de verrouillage F.

Dans la configuration de la figure 4, le balancier 20 est dans une position intermédiaire entre la position de fermeture F et la position d'ouverture O dans laquelle la tige 24 du balancier 20 n'interagit ni avec le premier taquet 40a, ni avec le second taquet 40b. Ainsi, le premier taquet 40a et le second taquet 40b sont chacun maintenus dans leur position déployée sous l'action des moyens élastiques.

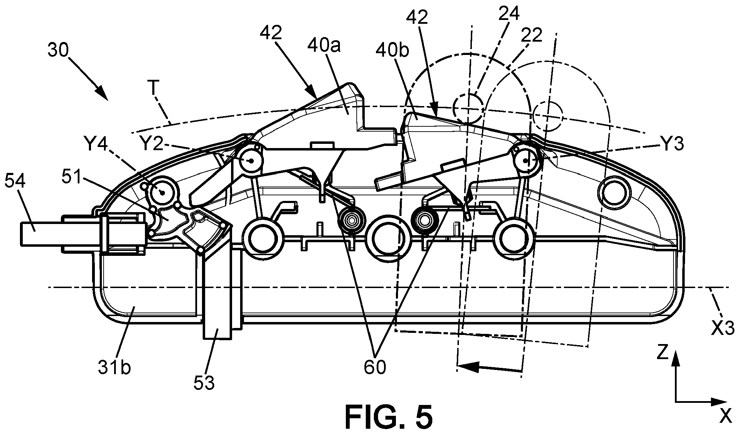

Dans la configuration représentée à la figure 5, le balancier 20 pivote davantage autour du premier axe transversal Y1 depuis la position d'ouverture O vers la position de fermeture F tel que représenté par la flèche P. La tige 24 est donc déplacée en rotation autour du premier axe transversal Y1 jusqu'à être en appui sur la face supérieure 42 du second taquet 40b dans sa position déployée. La poursuite du pivotement du balancier 20 vers la position de verrouillage génère un effet de rampe de la tige 24 sur la face supérieure du second taquet 40b de sorte à entrainer celui-ci en rotation autour du troisième axe transversal Y3 vers sa position escamotée comme visible à la figure 5. De manière remarquable, le second taquet 40b est ici déplacé de la position déployée vers la position escamotée indépendamment d'un mouvement du premier taquet 40a. La tige 24 continue ensuite sa course autour du premier axe transversal Y1 jusqu'à buter contre la face latérale 43 du premier taquet 40a.

Enfin dans la configuration de la figure 6, le balancier 20 est dans sa position de verrouillage F. La tige 24 du balancier 20 n'exerce plus d'appui sur le second taquet 40b. Le second taquet 40b est donc déplacé vers sa position déployée sous l'action des moyens élastiques.

Plus particulièrement visible à la figure 10, le premier taquet 40a coopère avec le second taquet 40b de sorte qu'un déplacement du premier taquet 40a de la position déployée vers la position escamotée entraine un déplacement du second taquet 40b de la position déployée vers la position escamotée. Inversement, un déplacement du second taquet 40b de la position escamotée vers la position déployée est apte à entrainer un déplacement du premier taquet 40a de la position escamotée vers la position déployée. Le premier taquet 40a comprend une partie saillante 46 en appui dans la direction verticale sur une partie saillante 47 du second taquet 40b. Cela permet de réduire l'encombrement du mécanisme de verrouillage 30. Plus particulièrement, cela permet de réduire l'encombrement du premier taquet 40a et du second taquet 40b à l'intérieur du volume intérieur défini par la platine 31. Aussi, la partie saillante 46 du premier taquet 40a peut être en forme de U pour recouvrir la partie saillante 47 du second taquet 40b. Notamment, la partie saillante 46 du premier taquet 40a encadre transversalement la partie saillante 47 du second taquet 40b. Cela permet d'éviter un débattement dans la direction transversale Y de l'un des taquets 40a, 40b par rapport à l'autre.

Une barrière 10 telle que décrite ci-avant permet d'obtenir un verrouillage robuste du balancier 20 par rapport au cadre. En particulier, la fourche 22 du balancier 20 est dépourvue de tout élément mobile ou coulissant nécessaire au verrouillage du balancier 20. Aussi les risques d'obstruction ou d'obturation du mécanisme de verrouillage 30, dûs à des résidus, sont limités, voire empêchés. Par ailleurs, un tel agencement autorise le passage de la tige 24 pour solidariser les branches 23 de la fourche 22, permettant ainsi une résistance mécanique accrue des branches 23 de la fourche 22 l'une par rapport à l'autre.

Enfin, en référence aux figures 7 à 9, le mécanisme de verrouillage 30 comprend un organe de commande adapté pour déplacer le premier taquet 40a de la position déployée vers la position escamotée. Moyennant la coopération du premier taquet 40a avec le second taquet 40b décrite précédemment, l'organe de commande permet donc de déplacer le second taquet 40b de la position déployée vers la position escamotée par l'intermédiaire du premier taquet 40a. L'organe de commande permet donc de libérer le balancier 20 lorsque celui-ci est bloqué en pivotement dans la position de verrouillage.

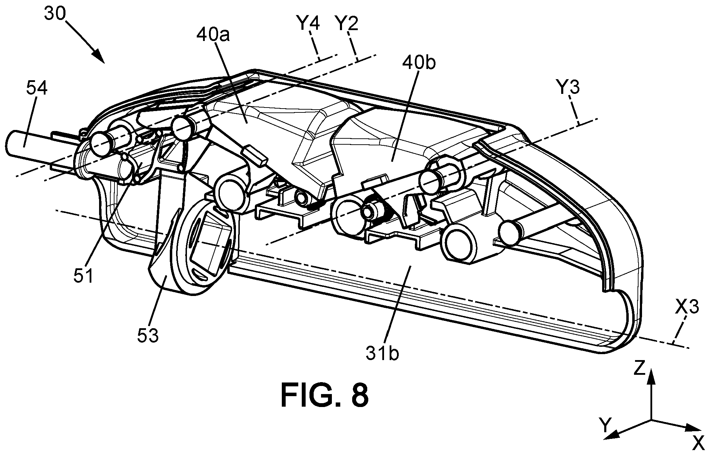

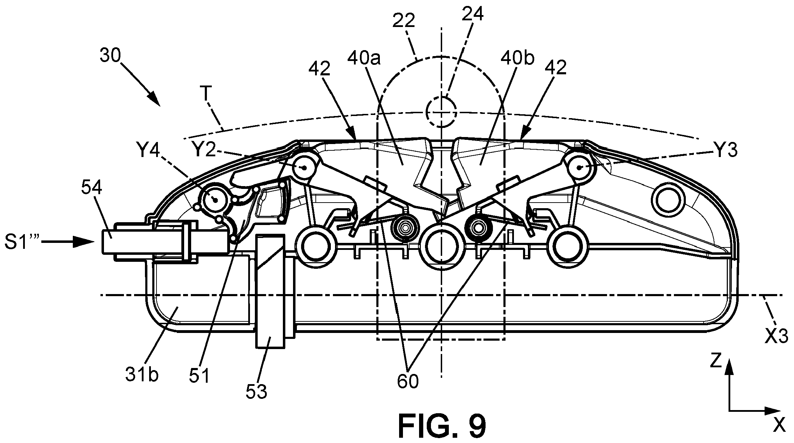

L'organe de commande comporte ici une commande de déverrouillage collective et une commande de déverrouillage individuelle. La commande de déverrouillage collective et la commande de déverrouillage individuelle sont indépendantes l'une de l'autre et permettent chacune une commande du premier taquet 40a et du second taquet 40b de la position déployée vers la position escamotée. Les figures 7 et 8 représentent une configuration du mécanisme de verrouillage 30 lors de l'usage de la commande de déverrouillage collective et la figure 9 représente une configuration du mécanisme de verrouillage 30 lors de l'usage de la commande individuelle.

L'organe de commande comprend également un organe de liaison 51 monté pivotant par rapport à la platine 31 autour d'un quatrième axe transversal Y4. L'organe de liaison 51 est interposé, d'une part, entre la commande de déverrouillage collective et le premier taquet 40a et, d'autre part, entre la commande de déverrouillage individuelle et le premier taquet 40a. L'organe de liaison 51 est disposé à l'intérieur du volume intérieur défini par la platine 31.

L'organe de liaison 51 coopère avec le premier taquet 40a de sorte qu'une rotation de l'organe de liaison 51 autour du quatrième axe transversal Y4 dans un premier sens S1' entraine une rotation du premier taquet 40a autour du deuxième axe transversal Y2 de la position déployée vers la position escamotée. A cet effet, l'organe de liaison 51 est en appui sur une paroi d'appui 48 du premier taquet 40a, notamment sur une face inférieure de la paroi d'appui 48.

La commande de déverrouillage collective comprend une tringle 52 s'étendant longitudinalement suivant un troisième axe transversal Y3. La commande de déverrouillage comporte également une came 53 montée sur la tringle 52 de manière fixe en rotation autour du troisième axe longitudinal X3. Pour ce faire, la tringle 52 présente une section de forme carrée et la came 53 présente un trou 53a à travers lequel passe la tringle 52, le trou 53a ayant une forme adaptée pour être associée par complémentarité de forme à la tringle 52 et pour permettre la solidarisation en rotation entre la tringle 52 et la came 53 autour du troisième axe longitudinal X3. Ici, le trou 53a de la came 53 est aussi de forme carrée.

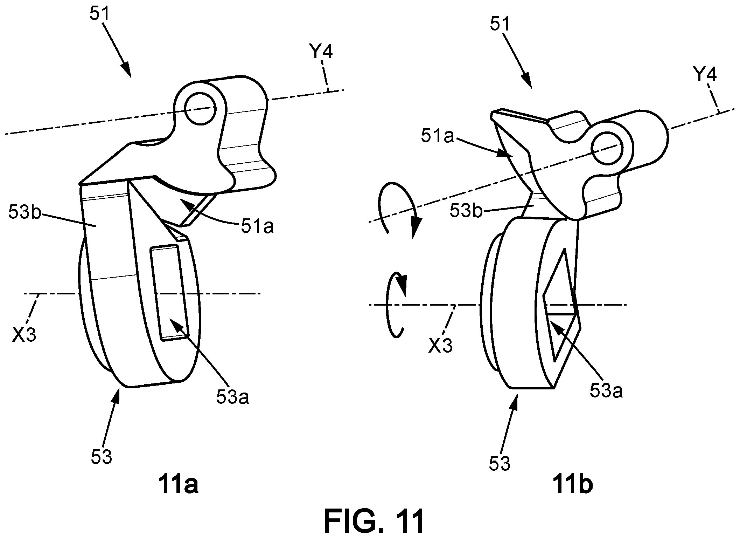

Comme représentée à la figure 11, la came 53 coopère avec l'organe de liaison 51 de sorte qu'une rotation de la tringle 52 et de la came 53 autour du troisième axe longitudinal X3 dans un premier sens S1" entraine une rotation de l'organe de liaison 51 autour du quatrième axe transversal Y4 dans le premier sens S1'. Pour ce faire, la came 53 comprend un relief 53b qui coopère par effet de rampe avec une paroi hélicoïdale 51a de l'organe de liaison 51.

Ainsi, moyennant l'agencement de la commande de déverrouillage collective, une rotation de la tringle 52 autour du troisième axe longitudinal X3 commande une rotation du premier taquet 40a autour du deuxième axe transversal Y2 de la position déployée vers la position escamotée. La coopération entre la came 53 et l'organe de commande est tel que le premier taquet 40a est déplacé de la position déployée à la position escamotée par une rotation de la tringle 52, autour du troisième axe longitudinal X3 sur une plage angulaire égale à 45°. Une rotation de la tringle 52 sur une faible plage angulaire permet une utilisation aisée de la tringle 52 par un opérateur de la barrière 10.

Avantageusement, la tringle 52 n'encaisse pas les efforts induits par un animal sur le balancier 20. De plus, la tringle 52 subit uniquement des efforts de torsion. En particulier, la tringle 52 ne subit pas d'effort de flexion et ne subit pas d'effort en porte-à-faux.

La tringle 52 traverse, de part en part, la platine 31 du mécanisme de verrouillage 30 dans la direction longitudinale X. La tringle 52 peut ainsi s'étendre longitudinalement sur toute la longueur du longeron supérieur 11 pour permettre la commande simultanée d'une pluralité de mécanismes de verrouillage portés par le longeron supérieur 11.

La tringle 52 est par ailleurs disposée, dans la direction verticale Z, entre le longeron supérieur 11 et la tige 24 du balancier 20. Un tel agencement permet de disposer la tringle 52 au plus proche du longeron supérieur 11 dans la direction verticale Z. Autrement dit, cela permet de réduire l'entraxe e1 entre le premier axe longitudinal X1 et le troisième axe longitudinal X3, ce qui réduit l'encombrement de l'agencement.

La commande de déverrouillage individuelle comprend un bouton poussoir 54. Le bouton poussoir 54 s'étend suivant la direction longitudinale X. Le bouton poussoir 54 coopère avec l'organe de liaison 51 de sorte qu'une translation du bouton poussoir 54 dans la direction longitudinale X selon un premier sens S1‴ de translation entraine une rotation de l'organe de liaison 51 autour du quatrième axe transversal Y4 selon le premier sens S1'. Pour ce faire, le bouton poussoir 54 est en appui, dans la direction longitudinale X, sur l'organe de liaison 51 à distance du quatrième axe transversal Y4 suivant la direction verticale Z. Le bouton poussoir 54 s'étend, par ailleurs, en partie à l'extérieur de la platine 31 pour être accessible à un opérateur humain via sa main ou par utilisation d'un manche de fourche ou tout autre outil. En effet, le manche de fourche ou tout autre outil peut être glissé sur la tringle 52 pour frapper le bouton poussoir 54 et ainsi provoquer l'escamotage du premier taquet 40a. La platine 31 présente un trou sur une face latérale, lequel étant traversé par le bouton poussoir 54. La commande de déverrouillage individuelle permet de déverrouiller sélectivement un mécanisme de verrouillage 30, notamment lorsque la barrière 10 comporte une pluralité de mécanismes de verrouillage portés par le longeron supérieur 11.

L'organe de commande est décrit ci-dessus à titre d'exemple. Il peut être prévu une commande sélective ou groupée possiblement actionnable à distance. Il n'est pas exclu de prévoir un autre type d'organe de commande. Par exemple, selon une variante de réalisation, il peut être prévu un organe de commande dont l'agencement permet une motorisation dont la cinématique est à mouvement de translation et/ou de rotation.

## Revendications

1. Barrière (10) de type cornadis comprenant :
- un longeron supérieur (11) et un longeron inférieur (12) s'étendant chacun selon une direction longitudinale (X) ;
- une paire de montants verticaux (13a, 13b) chacun reliés au longeron inférieur (12) et au longeron supérieur (11) de sorte à définir un cadre,
- un balancier (20) monté pivotant par rapport au cadre autour d'un premier axe transversal (Y1), le balancier (20) comportant un bras (21) et une fourche (22), laquelle étant solidaire d'une extrémité supérieure du bras (21), la fourche comportant une paire de branches (23) disposées de chaque côté du longeron supérieur (11) dans la direction transversale (Y), le balancier comportant en outre une tige (24) reliée rigidement à chacune des branches (23) de la fourche (22), la tige (24) étant disposée au-dessus du longeron supérieur (11) dans la direction verticale (X),
- un mécanisme de verrouillage (30) comprenant une platine (31) fixée au longeron supérieur (11) et sur laquelle sont articulés un premier taquet (40a) et un second taquet (40b) entre une position déployée dans laquelle le premier taquet (40a) et le second taquet (40b) sont adaptés pour coopérer avec la tige (24) du balancier (20) afin de bloquer le balancier (20) en pivotement autour du premier axe transversal (Y) dans une position de verrouillage par rapport au cadre, et une position escamotée dans laquelle le balancier (20) peut pivoter librement autour du premier axe transversal (Y) par rapport au cadre,
- un organe de commande adapté pour déplacer le premier taquet (40a) et/ou le second taquet (40b) de la position déployée vers la position escamotée.

2. Barrière (10) de type cornadis selon la revendication précédente, dans laquelle le premier taquet (40a) et le second taquet (40b) sont articulés pivotant par rapport à la platine (31), respectivement autour d'un deuxième axe transversal (Y2) et d'un troisième axe transversal (Y3).

3. Barrière (10) de type cornadis selon l'une quelconque des revendications précédentes, dans laquelle le premier taquet (40a) et/ou le second taquet (40b) sont chacun adaptés pour être déplacés de la position déployée vers la position escamotée sous l'effet du balancier (20) pivotant vers la position de verrouillage.

4. Barrière (10) de type cornadis selon l'une quelconque des revendications précédentes, dans laquelle le premier taquet (40a) coopère avec le second taquet (40b) de sorte qu'un déplacement du premier taquet (40a) de la position déployée vers la position escamotée entraine un déplacement du second taquet (40b) de la position déployée vers la position escamotée.

5. Barrière (10) de type cornadis selon l'une quelconque des revendications précédentes, dans laquelle le mécanisme de verrouillage (30) comprend des moyens adaptés pour assurer un rappel du premier taquet (40a) et du second taquet (40b) dans la position déployée.

6. Barrière (10) de type cornadis selon la revendication précédente, dans laquelle lesdits moyens comprennent des moyens élastiques.

7. Barrière (10) de type cornadis selon l'une quelconque des revendications précédentes, dans laquelle l'organe de commande comporte une commande de déverrouillage collective qui comprend une tringle (52) s'étendant parallèlement au longeron supérieur (11), la tringle (52) étant disposée, dans la direction verticale (Z), entre le longeron supérieur (11) et la tige (24) du balancier (20), et dans laquelle une rotation de la tringle (52) autour de son axe d'extension (X3) entraine un déplacement du premier taquet (40a) et/ou du second taquet (40b) de la position déployée vers la position escamotée.

8. Barrière (10) de type cornadis selon l'une quelconque des revendications précédentes, dans laquelle le mécanisme de verrouillage (30) comprend une commande de déverrouillage individuelle qui comprend au moins un bouton poussoir (54) conformé pour déplacer l'un parmi le premier taquet (40a) et le second taquet (40b) de la position déployée vers la position escamotée.

9. Barrière (10) de type cornadis selon la revendication précédente, la revendication 7 s'appliquant, dans laquelle l'organe de commande comprend un organe de liaison (51) monté pivotant par rapport à la platine (31) autour d'un quatrième axe transversal (Y4), l'organe de liaison (51) étant interposé, d'une part, entre la tringle (52) et l'un parmi le premier taquet (40a) et le second taquet (40b) et, d'autre part, entre le bouton poussoir (54) et ledit taquet considéré parmi le premier taquet (40a) et le second taquet (40b).

10. Barrière (10) de type cornadis selon l'une quelconque des revendications précédentes, dans laquelle le premier taquet (40a) et le second taquet (40b) sont chacun réalisés en un matériau plastique.
